(19) Europäisches Patentamt
European Patent Office
Office européen des brevets

(11) **EP 1 745 560 B1**

(12) **EUROPEAN PATENT SPECIFICATION**

(45) Date of publication and mention
of the grant of the patent:
**24.09.2008 Bulletin 2008/39**

(51) Int Cl.:
*H04B 1/69* (2006.01)

(21) Application number: **05739293.8**

(86) International application number:
**PCT/GB2005/050061**

(22) Date of filing: **06.05.2005**

(87) International publication number:
**WO 2005/112289 (24.11.2005 Gazette 2005/47)**

(54) **WIRELESS DATA TRANSMISSION METHOD AND APPARATUS**

DRAHTLOSES DATENÜBERTRAGUNGSVERFAHREN UND VORRICHTUNG

PROCEDE ET APPAREIL DE TRANSMISSION DE DONNEES SANS FIL

(84) Designated Contracting States:
**AT BE BG CH CY CZ DE DK EE ES FI FR GB GR HU IE IS IT LI LT LU MC NL PL PT RO SE SI SK TR**

(30) Priority: **13.05.2004 GB 0410693**

(43) Date of publication of application:
**24.01.2007 Bulletin 2007/04**

(73) Proprietor: **Toumaz Technology Limited**
**Abingdon Oxfordshire OX14 4RY (GB)**

(72) Inventors:
• **TOUMAZOU, Christofer**
**Abingdon Oxfordshire OX14 4RY (GB)**
• **LEE, Chun Yi**
**Abingdon Oxfordshire OX14 4RY (GB)**

(74) Representative: **Lind, Robert**
**Marks & Clerk**
**4220 Nash Court**
**Oxford Business Park South**
**Oxford**
**OX4 2RU (GB)**

(56) References cited:
• CHUN YI LEE ET AL: "Reference sharing ultra wideband communication system" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages 121-124, XP010719751 ISBN: 0-7803-8251-X

• CHUN YI LEE ET AL: "Power spectral density of transmit reference doublet trains and reference sharing doublet trains in ultra wideband systems" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages 445-448, XP010719888 ISBN: 0-7803-8251-X

• CHUN YI LEE ET AL: "3-state pseudorandom noise (PN)sequence 3-pulse reference sharing ultra wideband system" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages 117-120, XP010719750 ISBN: 0-7803-8251-X

• HOCTOR R T: "Multiple access capacity in multipath channels of delay-hopped transmitted-reference UWB" ULTRA WIDEBAND SYSTEMS AND TECHNOLOGIES, 2003 IEEE CONFERENCE ON NOV. 16-19, 2003, PISCATAWAY, NJ, USA, IEEE, 16 November 2003 (2003-11-16), pages 315-319, XP010683780 ISBN: 0-7803-8187-4

• 2002 IEEE CONFERENCE ON ULTRA WIDEBAND SYSTEMS AND TECHNOLOGIES 21-23 MAY 2002 BALTIMORE, MD, USA, 21 May 2003 (2003-05-21), - 2002 pages 265-269, XP002338580 2002 IEEE Conference on Ultra Wideband Systems and Technologies (IEEE Cat. No.02EX580) IEEE Piscataway, NJ, USA ISBN: 0-7803-7496-7

EP 1 745 560 B1

- **2002 IEEE CONFERENCE ON ULTRA WIDEBAND SYSTEMS AND TECHNOLOGIES 21-23 MAY 2002 BALTIMORE, MD, USA, 21 May 2002 (2002-05-21), pages 93-98, XP002338581 2002 IEEE Conference on Ultra Wideband Systems and Technologies (IEEE Cat. No.02EX580) IEEE Piscataway, NJ, USA ISBN: 0-7803-7496-7**

**Description**

<u>Field of the Invention</u>

The present invention relates to wireless data transmission methods and apparatus and in particular to wireless telemetry methods and apparatus which use ultra-wideband technology.

<u>Background to the Invention</u>

A demand exists for ultra-low power wireless transmissions systems, particularly in the field of wireless telemetry where one or more sensor devices are required to transmit measured data to a data collection device. Consider for example a system for monitoring conditions in the human body such as blood pressure or electrical signals such as ECG or EEG, and which makes use of an implanted sensor. The sensor is coupled directly to a transmitter (also implanted) and optionally a receiver. Typically, the sensor/transmitter arrangement is powered by a miniature battery which may be rechargeable. Recharging may be achieved via an inductive link. However, regardless of whether or not the battery is rechargeable, it is crucial that the power consumption of the implanted components be reduced to an absolute minimum in order to avoid unexpected failure of the system (and/or the need to frequently recharge the implanted battery).

A significant factor in determining power consumption is the wireless transmission scheme used. One might for example consider a simple analogue modulation scheme such as frequency modulation. However, digital modulation schemes are preferred due to their improved resistance to noise. Specifically, one might look to use a scheme in which each bit of information to be sent is encoded with particular code, depending upon whether the bit of data is a "1" or a "0". Such schemes require only very low power transmission levels whilst offering excellent signal-to-noise ratios. Power consumption levels of an implanted system might be reduced further by using a bit coding ultra-wide band (UWB) transmission scheme which avoids the need for a power hungry carrier signal, transmitting information in the form of discrete pulses of electromagnetic radiation. Detailed considerations of UWB can be found in: i) "Impulse radio ",Robert A. Scholtz and Moe Z. Win, invited paper, IEEE PIMRC'97 - Helsinki, Finland, ii) Delay-hopped Transmitter-Reference RF communications, Ralph Hoctor and Harold Tomlinson, GE Global Research, Niskayuna NY, iii) at www.uwb.org.

The use of UWB schemes has several key benefits that a conventional sinusoidal carrier-based radio does not possess with. However, systems which use single pulse per information bit, for example TH-PPM and DS-PPM, rely on precise synchronization between the transmitter and the receiver. The design requirements placed on the timekeeper is very high, especially when the UWB pulses are only several hundreds picoseconds wide. To acquire the absolute positions of the pulses on the time line and to maintain the high precision time reference are difficult and very power consuming tasks.

An ultra-wide band scheme known as Transmit Reference UWB (or TR-UWB) has been proposed (see - "Delay-hopped Transmitter-Reference RF communications", Ralph Hoctor and Harold Tomlinson, GE Global Research, Niskayuna NY). TR-UWB avoids the high synchronization precision and the pulse template mismatch problems of other UWB schemes, but at the expense of higher emission power (due to the need to send a reference pulse for every "data" pulse). The basic information transmitting unit is defined as a transmit reference doublet (TR-doublet), which consists of a reference pulse and a data modulating pulse. Information is carried in the inter-pulse delay $t_d$. At the receiver, a delay-multiply-integrate (DMI) unit is used to demodulate data embedded in the doublets. The operation of the DMI unit is similar to that of a matched filter. The key difference is the replacement of the local pulse template in a matched filter with the received reference pulse. This represents a suboptimal pulse detection scheme due to noise in the reference pulse. It simplifies significantly the design of the receiver and virtually no synchronization is required at the receiver because once the delay time $t_{rx}$ matches the inter-pulse delay $t_d$ of the incoming doublet, data can be demodulated.

As mentioned in the previous paragraph, information is carried by the relative position of the reference pulse and the data pulse: the absolute position of the pulse doublet is no longer important. Therefore, the timing of the generation of each doublet does not need to be as precise as is required in matched filter based UWB systems. In addition, the generation of the TR-doublets does not rely on complicated hardware but only some delay lines.

Another advantage of TR-UWB system is that the DMI unit in the receiver can capture multipath energies easily because the inter-pulse delays of TR-doublets in different paths remain the same. This avoids the need for a Rake receiver architecture to capture multipaths signals, an architecture which would have to operate at around 4GHz and which would therefore undoubtedly be complex and power hungry.

The problems with TR-UWB systems mainly lie on the low efficiency of the resultant TR-double train.

Whilst the above discussion has concerned systems comprising a human body implantable sensor, it will be appreciated that UWB systems such as TR-UWB are applicable in many other areas, and that improving upon the performance of UWB systems will produce widespread benefits.

## Summary of the Invention

According to a first aspect of the present invention there is provided an ultra-wideband wireless information transmission method comprising:

transmitting electromagnetic data pulses and reference pulses over the transmission medium, information being encoded as a time shift between the data pulses and the reference pulses, at least two of the data pulses sharing a common reference pulse; and
receiving the data and reference pulses and using the associated timing information to recover said information.

By sharing a reference pulse between two or more data pulses, embodiments of the invention achieve a significant saving in the power required to transmit information.

Preferably, said transmission method comprises encoding each bit of information to be sent using a pseudorandom noise (PN) code. The code is made up of code elements each of which has three possible states, 00, 11, and 10 (or 01). Each element is transmitted as a pulse "doublet" comprises a reference pulse and two data pulses, one data pulse on each side of the reference pulse. The time spacing between the reference pulse and each data pulse has one of two values. The step of receiving the data and reference pulses and using the associated timing information to recover said information comprises identifying a PN code in the received doublet stream and mapping that code to a binary 1 or 0 to recover the original information.

According to a second aspect of the present invention there is provided an ultra-wideband wireless data transmitter comprising:

processing means for encoding information as a sequence of data and reference pulses, the information being encoded as a time shift between the data pulses and the reference pulses, at least two of the data pulses sharing a common reference pulse; and
transmission means for sending the pulse sequence over a transmission medium as corresponding pulses of electromagnetic radiation.

Preferably, the processing means comprises:

means for generating a pulse;
a first delay circuit having an input for receiving said pulse, and means for applying a first or second delay to said pulse;
a second delay circuit having an input for receiving the delayed pulse from the first delay circuit and means for applying said first or second delay to the pulse; and
an output coupled to receive the output of said means for generating a pulse, and of said first and second delay circuits, the output being coupled to said transmission means.

According to a third aspect of the present invention there is provided an ultra-wideband wireless data receiver comprising:

receiver means for receiving an electromagnetic pulse sequence sent over a transmission medium, information being encoded as a time shift between the data pulses and the reference pulses, at least two of the data pulses sharing a common reference pulse;
processing means for recovering the encoded information from the received pulse sequence.

Preferably, each reference pulse is shared by two data pulses sent on either side of the reference pulse. Said processing means comprises a pair of delay means arranged to delay the received pulse sequence by different amounts corresponding respectively to the two delays used to encode information. A pair of multipliers receive the received signal in parallel, in addition to respective outputs of the delay means. A pair of integrators receive the outputs of respective multipliers.

Where original information is encoded using PN codes, correlation means is provided for correlating the outputs of the integrators to detect the presence of the specified PN codes, and hence recover the original information.

## Brief Description of the Drawing

Figure 1 illustrates a 3-state PN coding scheme;

Figure 2 illustrates schematically a transmitter architecture for use in a RS-UWB scheme;
Figure 3 illustrates schematically a front end DMI architecture of a receiver for use in a RS-UWB scheme;
Figure 4 illustrates and alternative front end DMI architecture of a receiver for use in a RS-UWB scheme;
Figure 5 shows various RS-UWB signals;
Figure 6 illustrates schematically a transmitter of a TR-UWB scheme;
Figure 7 illustrates schematically a simplified receiver architecture for a TR-UWB scheme;
Figure 8 illustrates in more detail a receiver architecture for a TR-UWB scheme;
Figure 9 shows a plot of power saved vs pulse amplitude for a RS-UWB scheme as compared to a TR-UWB scheme;
Figure 10 plots the PSD for a TR doublet train;
Figure 11 plots the PSD of a bipolar TR-doublet train and a bipolar RS-doublet train;
Figure 12 plots the PSD of a TR-doublet train and a RS-double train;
Figure 13 plots the probability density function of the random delay of a RS-doublet; and
Figure 14 plots a PSD comparison between bipolar time dither RS-doublet train and a normal RS-doublet train.

Detailed Description of Certain Embodiments

As has already been outlined above, a power efficient mechanism for transmitting information, and which is robust in the presence of noise and interference, is to encode each bit of information using a specific code depending upon whether the bit is a "1" or a "0". A typical system might use a 32 bit code to represent each bit. A correlator analyses the received signal to identify the presence in the signal of either of the two 32 bit codes, thus decoding the signal into a sequence of 1's and 0's corresponding to the original information. The known Transmit Reference Ultra-Wideband scheme (TR-UWB) encodes each bit of the coded data as a pair of pulses, the time spacing between the pulses having one of two values, a first of the values corresponding to a 0, and a second of the values corresponding to a 1.

The Ultra-Wideband scheme which will now be described is a modification of the Transmit Reference scheme and is referred to hereinafter as Reference Sharing or "RS". The basic concept of the RS scheme is to combine two or more TR-doublets by sharing a common reference pulse so that a higher percentage of pulse energy can be captured by the integrator. By sharing a reference pulse between two TR-doublets, a Reference Sharing doublet (RS-doublet) can be formulated as:

$$ p\left(t - jT_b\right) + Ap\left(t - jT_b - t_{d_{k,i,j}}\right) + p\left(t - jT_b - 2t_{d_{k,i,j}}\right) $$

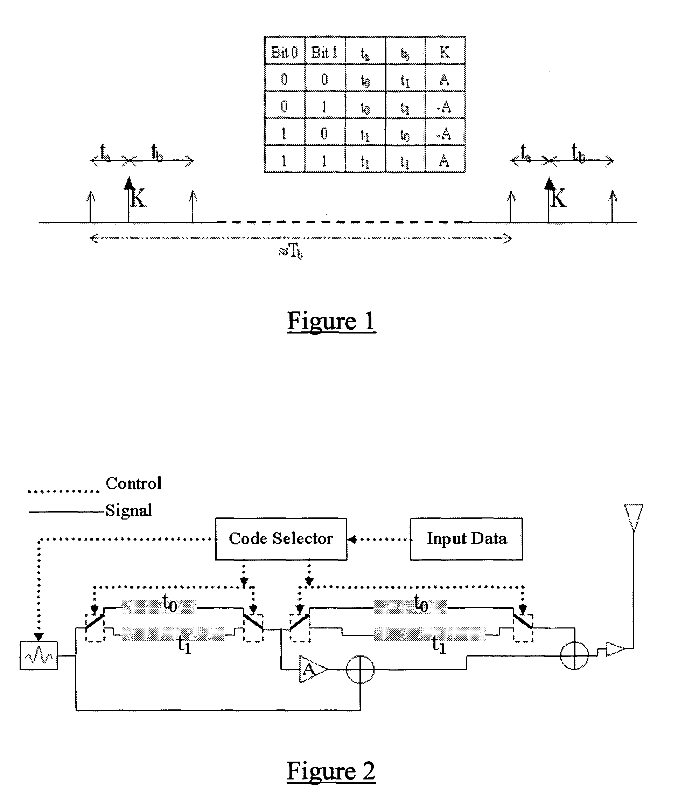

The centre pulse is the reference pulse, whilst the first and third pulses are the data pulses. $A$ is the amplitude of the reference pulse relative to that of the data pulses. Figure 1 shows the 3-state PN coding scheme used here.

Figure 2 illustrates schematically an example transmitter architecture for use in a RS-UWB scheme. The input data controls the code selector, which in turn controls the switches to add in various delayed pulses so that the output is an RS-doublet. The switches of each delay leg are synchronised to be in either "both up" or "both down" positions. In this demonstration, a delay of to between the reference pulse represents a Pseudo-random Noise (PN) code element "0" whilst a delay of $t_1$ represents a code element "1".

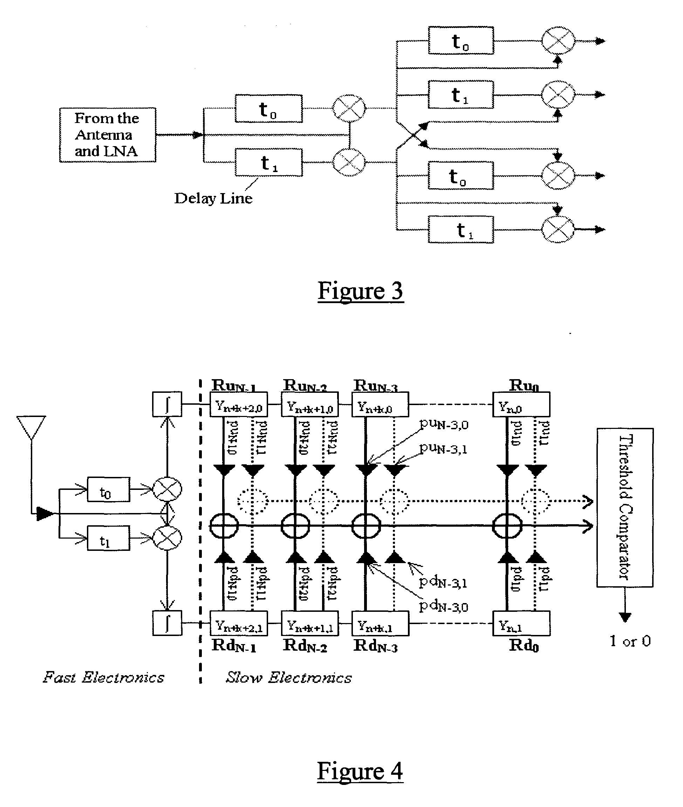

If it is necessary to distinguish all four of the RS doublet patterns at the receiver, a circuit comprising the front end DMI architecture illustrated in Figure 3 might be utilised. The circuit consists of six multipliers and six delay lines with high precision delay values. However, the receiver front end is likely to be noisy, power hungry, and highly dependent on the precisions of the delay lines. By sacrificing the number of distinguishable patterns, the receiver design can be simplified significantly. More particularly, it is found that extra levels of delay and multiplier circuits are required specifically to distinguish the RS doublets which represent "01" and "10". Therefore, by treating these two patterns as the same PN code element (i.e. restricting the PN codes to the code elements "00", "11", and "10/01"), the use of certain complex circuits can be avoided. A suitable, simplified receiver architecture is illustrated in Figure 4, which shows both the front end DMI, correlator, and output comparator.

The architecture of Figure 4 comprises two sets of analogue shift registers $Z_{n,0}$ and $Z_{n,1}$, which store the output samples of the integrators. The upper Delay-Multiply-Integrate (DMI) unit of the circuit captures the pulse energy of the TR-doublet with inter-pulse delay to, while the lower DMI unit captures that with inter-pulse delay $t_1$. A correlator receives the outputs of the DMI units and comprises two sets of analogue resistors which "store" the outputs of the integrators.

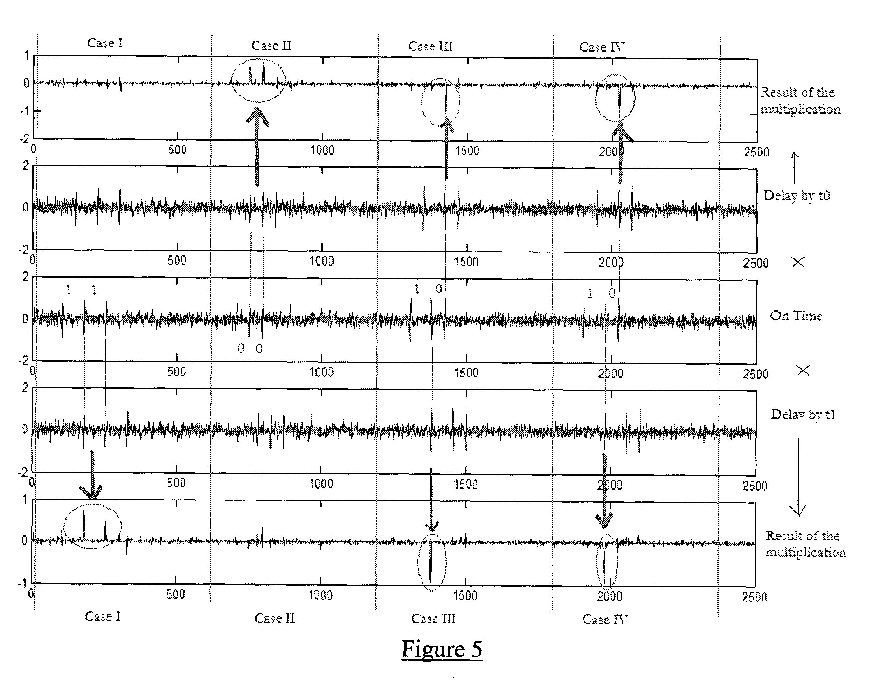

Figure 5 shows various RS-UWB signals for the purpose of illustrating the RS scheme. The centre (third) plot of the five plots illustrates an on-time signal, i.e. with no delay. The second and the fourth plot are the received signal delayed by $t_0$ and $t_1$ respectively. The first and the last plot are the result of the multiplication of the on-time signal and the signals delayed by $t_0$ and $t_1$ respectively. The PN code elements represented by each of the RS-doublets are written next to the doublet in the middle plot. Thus the on-time signal conveys the binary information "11" in the first time segment, "00" in the second time segment, "10" in the third time segment, and again "10" in the fourth segment, giving a combined code sequence of "11001010" which might represent a fractional part of a longer code sequence encoding either a 1 or a 0 of the original information.

It will be apparent from Figure 5 that the result of the multiplications depends crucially on the relative timings of the three pulses in a RS doublet. In the first case (11), multiplying the on-time signal with the signal delayed by to will result only in a signal fluctuating around zero due to noise. On the other hand, multiplying the on-time signal with the signal delayed by $t_1$ will result in a signal containing two pulses, coincident with the second and third pulses of the on-time RS doublet. Conversely, in the second case (00), multiplying the signal with the signal delayed by $t_1$ will result only in a signal fluctuating around zero, whilst multiplying the on-time signal with the signal delayed by to will result in a signal containing two pulses, coincident with the second and third pulses of the on-time RS doublet. In the third and fourth cases, the multiplication results will contain an inverted pulse, coincident with the third and second pulses of the on-time RS doublet respectively, due to the inversion of the reference pulse in the RS doublet.

Further analysis of the proposed RS-UWB scheme is provided in the following appendices.

Appendix I

Analysis of Efficiencies Achieved Using RS-UWB

A TR-doublet consists of a reference pulse and a data modulated pulse with well-defined inter-pulse delay $t_i$, which bears the bit information. The noise components are assumed to have zero mean and with two-sided power spectral density $N_o/2$ W/Hz. A TR-doublet can be expressed as:

$$s(t) = p(t) + p(t - t_i)$$

$$\text{s.t.} \quad p(t) = 0 \quad \text{for} \quad t > T_p, t < 0 \tag{1}$$

$p(t)$ is the UWB pulse of width $T_p$. ($T_p \ll t_i$) and $t_i$ is the inter-pulse delay.

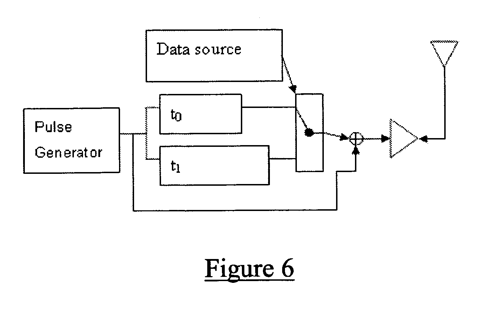

As shown in Figure 6, the digital data source chooses the delay line to be used. The pulse generator operates at a period of $T_b$ second. The ultra wideband amplifier boosts up the TR-doublet power to the required level and then feeds the doublet into the Ultra Wideband Antenna for transmission.

The output signal of the transmitter is:

$$s(t) = \sum_{j=0}^{N-1} p(t - jT_b) + p(t - jT_b - t_j) \tag{2}$$

where $N$ is the total number of doublet to be sent through the Additive White Gaussian Noise (AWGN) channel. Usually, $t_i$ is so small that the channel properties do not change during the propagation. Therefore, at the receiver, the received signal for each doublet is:

$$r(t) = \hat{p}(t - \tau_d) + \hat{p}(t - \tau_d - t_i) + n(t) \tag{3}$$

where $\hat{p}(t - \tau_d)$ is the received pulse, n(t) is the noise component. For short range (<10m) indoor channel, the channel impulse response $h(t)$ is assumed to be stationary during the propagation of the doublets. The relationship between $p(t)$ and $\hat{p}(t)$ is:

$$\hat{p}(\tau) = p(t) * h(t) \tag{4}$$

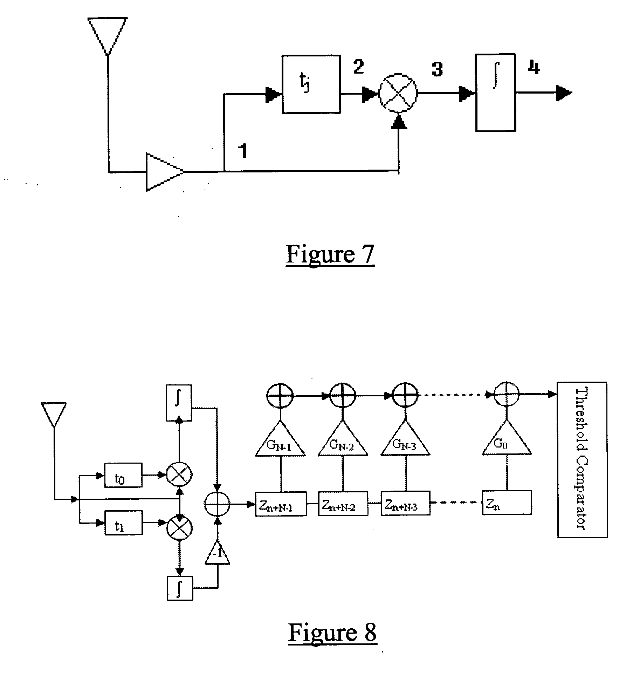

Referring to Figure 7, the received TR-doublet is split into two identical signals at point 1 after the front end low noise amplification. One of the signals is delayed by $t_j$ (point 2) and multiplied to the original signal (point 3). The integrator resets every $T_{int}$ seconds. At the same time, the integrator output is sampled at point 4:

$$Y_k = y(kT_{int}) = \int_{(k-1)T_{int}}^{kT_{int}} x(t)dt = \int_{(k-1)T_{int}}^{kT_{int}} r(t)r(t-t_j)dt = X_k + N_k \tag{5}$$

The samples in fact comprise two parts; the required signal component $X_k$ and the noise component $N_k$. By assuming $\hat{p}(t)$ is zero for $t>t_i$ or $t_j$, three cases can be classified.

| | |
|---|---|
| 1. $t_i = t_j$ | $X_k = \int_{(k-1)T_{int}}^{kT_{int}} \hat{p}^2(t-t_i)dt$ $= \int_0^{T_p} \hat{p}^2(t-t_i)dt = \hat{P}_o$ |
| 2. $t_i \neq t_j$ | $X_k = 0$ |
| 3. $\lvert t_i - t_j \rvert = t_D < T_p$ | $X_k = \int_{(k-1)T_{int}}^{kT_{int}} \hat{p}(t-t_i)\hat{p}(t-t_j)dt$ $= \int_0^{T_i} R_{\hat{p}\hat{p}}(\tau_\Delta)dt = K(\tau_\Delta)\hat{P}_o$ |

$$\tag{6}$$

In the third case, $R_{\hat{p}\hat{p}}(t_\Delta)$ is the correlation function of the pulse and it is pulse shape dependent. $K(\tau_\Delta)$ is the normalized correlation factor with value always less than one which indicates the portion of pulse energy that is captured due to misalignment $\tau_\Delta$. To maximize the energy captured at the integrator, $\tau_\Delta$ has to be as small as possible. Unavoidably, $\tau_\Delta$ is non-zero because it is a random variable which depends on the design and implementation of the delay line.

The noise components of the above three cases are the same:

$$N_k = \int_{(k-1)T_{int}}^{kT_{int}} \left( \begin{array}{c} n(t)\hat{p}(t-t_j) + n(t)\hat{p}(t-t_i-t_j) \\ +\hat{p}(t)n(t-t_j) + \hat{p}(t-t_i)n(t-t_j) + n(t)n(t-t_j) \end{array} \right) dt = \hat{n}_{k,1} + \hat{n}_{k,2} + \hat{n}_{k,3} + \hat{n}_{k,4} + \hat{n}_{k,5} \tag{7}$$

The noise properties of the first four terms in equation 7 are the same. By assuming that the cross correlations between the noise terms are insignificant, the total noise power becomes:

$$\sigma_i^2 = 4\hat{N}_{n\hat{p}} + \hat{N}_{nn} \tag{8}$$

$$\hat{N}_{n\hat{p}} = E\left[\hat{n}_{k,i}\hat{n}_{m,j}\right], j = 1,2,3,4 \quad \text{and} \quad \hat{N}_{nn} = E\left[\hat{n}_{k,j}\hat{n}_{m,j}\right], j = 5$$

Equation 3 is written with the assumption that the TR-doublets reach the receiver directly. In other words, there is no multipath. However, in both indoors and outdoors, multipaths exist. Assuming N multipaths, equation 3 becomes:

$$r(t) = \sum_{k=1}^{N} \left( \begin{array}{c} \hat{p}_k(t-\tau_k) + \\ \hat{p}_k(t-\tau_k-t_i) \end{array} \right) + n(t) \tag{9}$$

where $\hat{p}_k(t-\tau_k)$ is the pulse from the k-th multipath. The inter-pulse delays of the multipath signals remain the same. The first case of equation 6 is modified to:

$$X_k = \int_{(k-1)T_{int}}^{kT_{int}} \left( \sum_{k=1}^{N} \hat{p}_k^2(t - \tau_k - t_i) \right) dt = \sum_{k=1}^{N} \hat{P}_k. \tag{10}$$

From equation 10, it can be found that the integration length $T_{int}$ affects the total energy being captured from the multipaths positively. The longer the $T_{int}$, the more energy can be captured. However, the upper limit of the $T_{int}$ is the chip period $T_b$ of the doublets. The channel properties decide the optimal $T_{int}$.

The longer the $T_{int}$, the more noise enters the system. Note that the first four terms of 7 are generated by multiplying the pulse and the noise components. If more multipath components reach the receiver, more noise terms will appear in equation 7.

$$N_k = \sum_{i=1}^{N} \left( \begin{array}{c} \hat{n}_{i_{,1}} + \hat{n}_{i_{,2}} + \\ \hat{n}_{i_{,3}} + \hat{n}_{i_{,4}} \end{array} \right) + \hat{n}_{k,5} \tag{11}$$

So, $T_{int}$ is chosen to minimize the interference from other transmitters that are sending pulses, and to maximize the energy that can be captured from the multipaths. With a correctly chosen $T_{int}$, TR-UWB system receivers can effectively capture multipath energy with simple integrators instead of sophisticated Rake Receiver architecture.

By assuming only one path during propagation, the signal power to noise power ratio of a TR-doublet can be shown:

$$\left( S/N \right)_{TR.}^2 = \frac{\hat{P}_o^2}{\sigma_i^2} = \frac{\hat{P}_o^2}{4\hat{N}_{np} + \hat{N}_{nn}} \tag{12}$$

The noise power is larger than that in the match filter approach because of the extra reference pulse. The transmitter can increase the pulses energy to improve the reception SNR so that a TR-doublet can be detected more reliably. However, UWB communication systems are under strict emission power limitations to keep minimise their impact on other existing communication systems.

Instead of using one high energy TR-doublet for each information bit, a number of low energy TR-doublets with PN sequence ordering can be used to provide the same bit error performance and multiple access capability. The process is similar to delivering all the energy of a powerful TR-doublet to the receiver in a number of low power TR-doublets. The more low power TR-doublets are used, the less power of each TR-doublet carries and the lower the power consumption of the circuits. The drawback is a fall in the highest achievable data rate.

Consider a TR-doublet train generated by the transmitter illustrated in Figure 6. The inter-pulse delays of the TR-doublets are governed by a PN sequence.

$$s_{k,i}(t) = \sum_{m=0}^{N-1} p(t - mT_b) + p(t - mT_b - t_{C_{k,i,m}}) \tag{13}$$

$$C_{k,i,m} = \left\{ c_{k,i,0}, c_{k,i,1}, \ldots c_{k,i,N-1} \right\}, \quad c_{k,i,j} \in \{0,1\}$$

where $T_b$ is the period of the TR-doublets and $C_{k,i,m}$ is the code element of the PN sequence.

The receiver architecture of a TR-UWB system is shown in Figure 8. The n-th output of the integrator can be calculated from equation 5. The upper samples subtract the lower samples and the results are passed into the registers.

The correlation between the register values and the target code pattern is computed and the result of the correlation becomes:

$$Corr = \sum_{n=0}^{N-1} G_n Z_n = \sum_{n=0}^{N-1} G_n \left( \hat{X}_n + \hat{N}_n \right) = \sum_{n=0}^{N-1} G_n d_{k,i,n} \hat{P}_o + \sum_{n=0}^{N-1} G_n \hat{N}_n \qquad (14)$$

where $d_{k,i,n} = 2c_{k,I,n} - 1$ is controlled by the transmitter PN sequence.

The value of the first term of equation 14 depends on the degree of correlation between the target code pattern and the registers values. It is assumed that each TR-doublet suffers the same degree of attenuation and the correlations between the noise components in each $Z_n$ are insignificant. If $G_n d_{k,i,n} = 1$ for every n, the bit error probability can be shown as:

$$P_e = Q\left( \frac{NP_o}{2\sigma_o} \right) = Q\left( \sqrt{\frac{\left( N\hat{P}_o \right)^2}{4N\sigma_n^2}} \right) = Q\left( \sqrt{\frac{N\hat{P}_o^2}{32\hat{N}_{np} + 8\hat{N}_{nn}}} \right) \qquad (5)$$

where

$$Q(x) = 1 \big/ \sqrt{2\pi} \int_x^\infty e^{-t^2/2} dt$$

Two factors affect the system performance in the multiple user environment: (1) the cross-correlation property of the code sets of different users, and (2) the inter-pulse delays of the TR-doublets used by different users.

Assume that all users share the same set of TR-doublet inter-pulse delays. When users k and j fire two trains of doublets with different PN sequence, according to equation 6, the doublet energies from both users will appear in the registers of the receiver which is expecting information from only user k because they share the same set of inter-pulse delays. Therefore, if the code set is not well designed, the probability of an error will increase because of the cross correlation noise. Also, the doublets from users k and j are very likely unequal. If one of the air paths is shorter than the other, the doublet energy from the stronger path will dominate the other in the correlation result and so the error probability varies. By using a shorter $T_{int}$, the probability of the doublet energy from different transmitters added in the same register can be reduced; however, multipath energy is wasted and the complexity of the receiver is increased.

Another solution is to assign different inter-pulse delay value sets to different users, so that the DMI unit shown in Figure 7 interprets doublets from other users as noise rather than signals. With different inter-pulse delay sets, different users can share the same code set, and so the multiple access capacity can be increased.

When *N* TR-doublets are sent, *N* pulses out of the *2N* pulses are reference pulses, which are sent without any information. This is a waste of energy. The RS-UWB communication system proposes to share the reference pulse between several TR-doublets so that energy on reference pulses can be saved. A special case of sharing two TR-doublets is studied. A RS-doublet is defined as:

$$s(t) = p(t) + Ap(t - t_i) + p(t - 2t_i) \qquad (16)$$

where a PN sequence $c_{k,i,m}$ controls $t_i$, as mentioned in equation 13. The first and the third pulse are the information pulses whereas the second one is the shared reference.

The parameter A is the relative amplitude of the reference pulse to the data pulse. It is introduced to demonstrate the effect of relative amplitude on the overall transmission power saving. The received signal at the receiver is:

$$r(t) = \hat{p}(t - \tau_d) + A\hat{p}(t - \tau_d - t_i) + \hat{p}(t - \tau_d - 2t_i) + n(t) \qquad (17)$$

With the same receiver, the output of the integrators is different from that in equation 6 even if the receiver delay lines match with the inter-pulse delays. The output of the integrators become:

$$X_j = 2A \int_0^{T_i} \hat{p}^2(t - t_i)\,dt = 2A\hat{P}_o \tag{18}$$

$$N_j = \int_0^{T_i} \begin{bmatrix} n(t)\hat{p}(t - t_i) + A\hat{p}(t - 2t_i)n(t) + n(t)\hat{p}(t - 3t_i) \\ + \hat{p}(t)n(t - t_i) + An(t - t_i)\hat{p}(t - t_i) \\ + n(t - t_i)\hat{p}(t - 2t_i) + n(t)n(t - t_i) \end{bmatrix} dt$$

$\tau_d$ is chosen to be 0 to simplify the calculation. Since $T_p \ll t_i$, it is assumed that the delayed pulses are orthogonal to each other.

If the time delay $t_r$ is different from $t_i$, then $X_j$ is equal to 0 but the noise is still the same as that when $t_i$ equals to $t_r$. The total noise power can be shown as:

$$\sigma^2_{RS-doublet} = (4 + 2A)\,\hat{N}_{n\hat{p}} + \hat{N}_{nn}$$

To make a fair comparison, RS-doublets are used instead of TR-doublets having all others the same. It can be shown that the bit error rate with $N_{RS}$ RS-doublets is:

$$P_e = Q\left(\frac{AP_o N_{RS}}{\sigma_o}\right) = Q\left(\sqrt{\frac{A^2 \hat{P}_o^2 N_{RS}}{2(4 + 2A^2)\hat{N}_{np} + 2\hat{N}_{nn}}}\right) \tag{19}$$

Consider $N_{TR}$ TR-doublets and $N_{RS}$ RS-doublets are used and equation 15 and 19 are equalized. The relationship between $N_{TR}$ and $N_{RS}$ can be shown as:

$$N_{RS} \approx N_{TR}(2+A)/8A^2 \tag{20}$$

The energy of a TR-doublet and a RS-doublet are $2P_o$ and $(2+A^2)P_o$ respectively. Provided that the system bit error rates are the same, the percentage of energy saved by using RS-doublets can be shown as:

$$\frac{N_{TR}P_{TR} - N_{RSTR}P_{RSTR}}{N_{TR}P_{TR}} \times 100\%$$

$$\approx \left(1 - \frac{(2+A^2)(2+A^2)}{16A^2}\right) \times 100\% \tag{21}$$

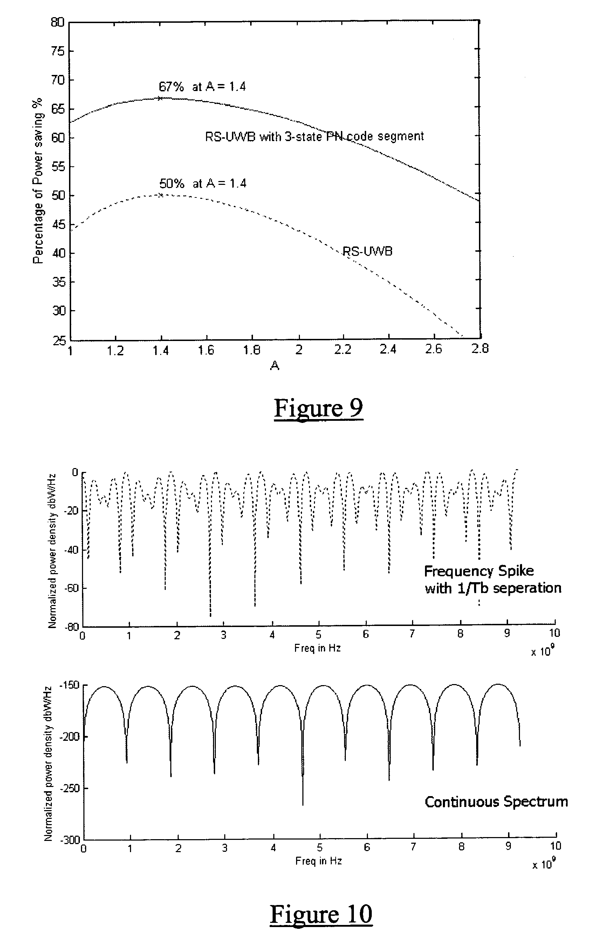

Referring to Figure 9, a maximum of 50% of energy can be saved.

Appendix II

Further Analysis of 3-State PN Sequence

Two unique PN code sets $\{C_0, C_1\}$, which represent a digital '0' and '1' respectively, are assigned to each user.

Each of them is $N_c$ bits long. The code selector chooses the PN code set according to the data to be sent. In TR-UWB systems, a TR-doublet of inter-pulse delay to will represent the code element '0' and a doublet of inter-pulse delay $t_1$ the code element '1'. In this 3-pulse RS-doublet approach, the inter-pulse delays are chosen according to Figure 1.

There are four different RS-doublets representing four different code patterns. For every two elements of the PN code, the inter-pulse delays $\{t_a, t_b\}$ and K are selected accordingly. Each of the PN code set is then made up of the above RS-doublets with the appropriate inter-pulse delays. As a result, $N_c$ bits of the PN code segment are represented by a train of $N_{RS}$ RS-doublets where $N_{RS} = N_c/2$.

Referring to Figure 2, the gain K and the values of the delay lines are set according to the table in Figure 1, the code selector triggers the pulse generator. The pulse generator generates pulses of pulse width $T_p$ upon receiving the triggering signal. The period of the RS-doublets is roughly $T_b$. The transmitting signal of digital data i of user k can be expressed as:

$$s_{k,i}(t) = \sum_{m=0}^{N_c-1} \begin{pmatrix} p(t-mT_b) + \\ Ap(t-mT_b-t_{m,a}) + \\ p(t-mT_b-t_{m,a}-t_{m,b}) \end{pmatrix} \qquad (1`)$$

Two levels of time-aligned multiplication have to be used to distinguish between the RS-doublet of pattern '01' and that of '10'. The circuit depicted in Figure 3 is complicated and very power consuming. Also, the true delay values of the time delay lines must be accurate in order to extract the maximum amount of energy from each RS-doublet received. Therefore, an alternative design is proposed to trade the possible PN code patterns to hardware complexity.

The two inter-pulse delays of a RS-doublet are controlled by two code elements taken from the code segment. The original code set $\{C_0, C_1\}$ consist of elements $c_{i,j}$ which are either 0 or 1. However, as mentioned before, extra circuits and extra power are needed to distinguish the pattern "01" from "10". So, a RS-doublet representing a "01" is indistinguishable from a RS-doublet representing a "10" unless complex circuits are used. To avoid using complex circuits, those two patterns are treated as the same. As a result, there are effectively three kinds of RS-doublets. i.e. $\{00, 11, 01$ or $10\}$. A new code set with elements $m_{i,j}$ is introduced to represent the new reduced code set.

$$C_j = \left\{ c_{0,j} c_{1,j} c_{2,j} c_{3,j} c_{4,j} c_{5,j} \cdots c_{N_c-2,j} c_{N_c-1,j} \right\}$$
$$= \left\{ m_{0,j} m_{1,j} m_{2,j} \cdots m_{N_c/2,j} \right\} \qquad (2`)$$

$C_{n,j} \in \{0,1\}$ where $m_{i,j} = c_{2i,j} + c_{2i,j} + c_{2i+1,j}$ such that $m_{i,j} \in \{0,1,2\}$

Both the transmitter and receiver share the same code sequence in $m_{i,j}$.

Figure 4 shows the receiver architecture of the proposed RS-UWB system. The analogue delay lines, the multipliers and the integrators are the key components. They are collectively called the delay-multiply-integrate (DMI) unit. The integrators collect the mean values of output signal of the multipliers. It is assumed that the integrators reset every $T_{int}$ second, which is roughly equal to $T_b$. However, it can be shown that pulse position dithering in the doublet train can improve the overall pattern of the power spectral density pattern. To demodulate RS-doublet trains with pulse position dithering, two sets of integrators and shift registers are used. These two sets of integrators are clocked by the same signal with duty cycle over 50% and 180° phase difference. However, to simplify the calculation of the performance of the proposed RS-UWB system, it is assumed that RS-doublets are sent regularly with period $T_b$.

Referring to Figure 4, the outputs of the integrators are:

$$Y_j = y(T_i) = \int_0^{T_i} r(t)r(t-t_r)dt = X_i + N_i \tag{3'}$$

$$= \int_o^{T_i} \begin{pmatrix} \begin{bmatrix} \hat{p}(t-\tau_d) \\ \hat{p}(t-\tau_d-t_r) \end{bmatrix} & \begin{bmatrix} A\hat{p}(t-\tau_d) \\ \hat{p}(t-\tau_d-t_i-t_r) \end{bmatrix} & \begin{bmatrix} \hat{p}(t-\tau_d) \\ \hat{p}(t-\tau_d-2t_i-t_r) \end{bmatrix} & \hat{p}(t-\tau_d)n(t-t_r) \\[2em] \begin{bmatrix} A\hat{p}(t-\tau_d-t_i) \\ \hat{p}(t-\tau_d-t_r) \end{bmatrix} & \begin{bmatrix} A^2\hat{p}(t-\tau_d-t_i) \\ \hat{p}(t-\tau_d-t_i-t_r) \end{bmatrix} & \begin{bmatrix} A\hat{p}(t-\tau_d-t_i) \\ \hat{p}(t-\tau_d-2t_i-t_r) \end{bmatrix} & \begin{bmatrix} An(t-t_r) \\ \hat{p}(t-\tau_d-t_i) \end{bmatrix} \\[2em] \begin{bmatrix} \hat{p}(t-\tau_d-2t_i) \\ \hat{p}(t-\tau_d-t_r) \end{bmatrix} & \begin{bmatrix} A\hat{p}(t-\tau_d-2t_i) \\ \hat{p}(t-\tau_d-t_i-t_r) \end{bmatrix} & \begin{bmatrix} \hat{p}(t-\tau_d-2t_i) \\ \hat{p}(t-\tau_d-2t_i-t_r) \end{bmatrix} & \begin{bmatrix} n(t-t_r) \\ \hat{p}(t-\tau_d-2t_i) \end{bmatrix} \\[2em] n(t)\hat{p}(t-\tau_d-t_r) & A\hat{p}(t-\tau_d-t_i-t_r)n(t) & n(t)\hat{p}(t-\tau_d-2t_i-t_r) & n(t)n(t-t_r) \end{pmatrix} dt$$

To simplify the calculation, $\tau_d$ is deliberately chosen to be 0 and it is assumed that the noise terms are not correlated to each other. The noise term $N_j$ of equation 3' becomes:

$$N_j = \int_0^{T_i} \begin{bmatrix} n(t)\hat{p}(t-t_i) + A\hat{p}(t-2t_i)n(t) + n(t)\hat{p}(t-3t_i) \\ +\hat{p}(t)n(t-t_i) + An(t-t_i)\hat{p}(t-t_i) \\ +n(t-t_i)\hat{p}(t-2t_i) + n(t)n(t-t_i) \end{bmatrix} dt$$

$$= (4+2A)N_{n\hat{p}} + N_{nn} = \hat{N}_o \tag{4}$$

$N_{n\hat{p}}$ is the noise term $\int_o^{T_i} \hat{p}(t-t_i)n(t-t_i)dt = N_oP_o/2$ and $N_{nn}$ is the noise term $\int_o^{T_i} n(t)n(t-t_i)dt$.

Referring to equation 3', the value of $X_j$ varies with the inter-pulse delays in the RS-doublet and is summarized in the table.

| Original | $c_{2i}c_{2i}+1$ | 00 | 01 | 10 | 11 | NIL |
|---|---|---|---|---|---|---|
| Modified | $m_i$ | 0 | 1 | 1 | 2 | NIL |
| Time | $t_a$ | $t_0$ | $t_0$ | $t_1$ | $t_1$ | X |
| | $t_b$ | $t_0$ | $t_1$ | $t_0$ | $t_1$ | X |
| Yi,0 | $X_{i,0}$ | $2A\hat{P}_0$ | $-A\hat{P}_0$ | $-A\hat{P}_0$ | 0 | 0 |
| | $N_{i,0}$ | $\hat{N}_o$ | $\hat{N}_o$ | $\hat{N}_o$ | $\hat{N}_o$ | $\hat{N}_o$ |
| Yi,1 | $X_{i,1}$ | 0 | $-A\hat{P}_0$ | $-A\hat{P}_0$ | $2A\hat{P}_0$ | 0 |
| | $N_{i,1}$ | $\hat{N}_o$ | $\hat{N}_o$ | $\hat{N}_o$ | $\hat{N}_o$ | $\hat{N}_o$ |

where X satisfies the conditions $|X-t_a|>T_p$ and $|X-t_b|>T_p$, and $\int_o^{T_i} \hat{p}^2(t-t_i)dt = \hat{P}_o$.

The exact code set $\{C_0,C_1\}$ that the transmitter uses is known to the receiver. By referring to Figure 3 and the following table, the sign of the multiplier $pu_{i,j}$ and $pd_{i,j}$ can be found.

| $m_{i,j}$ | $pu_{i,j}$ | $Pd_{i,j}$ |
|---|---|---|
| 0 | +1 | 0 |

(continued)

| $m_{i,j}$ | $pu_{i,j}$ | $Pd_{i,j}$ |
|---|---|---|
| 1 | -1 | -1 |
| 2 | 0 | +1 |

In Figure 4, the circuit in solid and dashed lines represents two correlation processes for code set $C_0$ and $C_1$ respectively. The correlation results are:

$$Corr_{C_k} = \sum_{i=0}^{N_{RSTR}} \underline{m}_{i,k} \underline{R}_i = \sum_{i=0}^{N_{RSTR}} \left( pu_{i,k} \quad pd_{i,k} \right) \begin{pmatrix} Ru_i \\ Rd_i \end{pmatrix}$$

$$= \sum_{i=0}^{N_{RSTR}} \left( pu_{i,k} X_{i,0} + pd_{i,k} X_{i,1} \right) + \sum_{i=0}^{N_{RSTR}} \left( pu_{i,k} N_{i,0} + pd_{i,k} N_{i,1} \right) \qquad (5`)$$

The first summation is the signal and the second summation is the noise. By defining P(x) be the probability of an event x, the first term and the second term can be expressed as follows if the received code pattern matches the expected pattern.

$$1st = N_{RSTR} 2 A \hat{P}_o \begin{pmatrix} P(m_{i,j} = 0) + \\ P(m_{i,j} = 1) + \\ P(m_{i,j} = 2) \end{pmatrix} = 2 A N_{RSTR} \hat{P}_o \qquad (6`)$$

$$2nd = N_{RSTR} \begin{pmatrix} P(m_{i,j} = 0) \hat{N}_o \\ +2P(m_{i,j} = 1) \hat{N}_o \\ +P(m_{i,j} = 2) \hat{N}_o \end{pmatrix} \qquad (7`)$$

The values of $P(m_{i,j}=0)$, $P(m_{i,j}=1)$ and $P(m_{i,j}=2)$ are governed by the properties of the PN code used. At the first sight, $P(m_{i,j}=1)$ should be taken to be zero in order to minimize the noise power entering the decision variable $Corr_{Ci}$. It can be shown that the multiple access performance is sacrificed if $P(m_{i,j}=1)$ is zero.

The multiple access performance relies on the cross correlation behavior of the code sets. In general, the cross correlation of two PN codes should be essentially zero so that the multiple users interference power is minimized. Consider that a receiver is expecting the code pattern $C_m$ but a RS-doublet train encoded in code pattern $C_n$ is received. The first term of equation 5' becomes:

$$N_{RS}\left(\begin{bmatrix} P(pu_{1,m}=-1)P(X_{i,0}=0)(-1)(0) \\ +P(pu_{1,m}=-1)P(X_{i,0}=-A\hat{P}_{0})(-1)(-A\hat{P}_{0}) \\ +P(pu_{1,m}=-1)P(X_{i,0}=2A\hat{P}_{0})(-1)(2A\hat{P}_{0}) \\ +P(pu_{1,m}=0)P(X_{i,0}=0)(0)(0) \\ +P(pu_{1,m}=0)P(X_{i,0}=-A\hat{P}_{0})(0)(-A\hat{P}_{0}) \\ +P(pu_{1,m}=0)P(X_{i,0}=2A\hat{P}_{0})(0)(2A\hat{P}_{0}) \\ +P(pu_{1,m}=1)P(X_{i,0}=0)(1)(0) \\ +P(pu_{1,m}=1)P(X_{i,0}=-A\hat{P}_{0})(1)(-A\hat{P}_{0}) \\ +P(pu_{1,m}=1)P(X_{i,0}=2A\hat{P}_{0})(1)(2A\hat{P}_{0}) \end{bmatrix} + \begin{bmatrix} P(pd_{1,m}=-1)P(X_{i,0}=0)(-1)(0) \\ \vdots \\ \vdots \\ \vdots \\ \vdots \\ \vdots \\ \vdots \\ \vdots \\ +P(pd_{1,m}=1)P(X_{i,0}=2A\hat{P}_{0})(1)(2A\hat{P}_{0}) \end{bmatrix}\right)$$

$$= 2A\hat{P}_{0}N_{RS}\left((P(m=1))^2 - P(m=2)P(m=1) - 2P(m=1)P(m=2) + 2(P(m=2))^2\right)$$

$$= 2A\hat{P}_{0}N_{RS}\left((P_{m}(1))^2 - 3P_{m}(1)P_{m}(2) + 2(P_{m}(2))^2\right) \tag{8'}$$

By assuming $P(m=0) = P(m=2)$, it can be proved that $P(m=1)$ is equal to ½ or 1/3. Equation 8' can thus be reduced to zero. To minimize the noise terms in equation 7', $P(m=1)$ has to be 1/3.

The overall SNR of using RS-doublets and modified PN code can be shown as:

$$\frac{A^2 P_{0}^2 N^2_{RS}}{\dfrac{N_{RS}4\left(\left(4+2A^2\right)\hat{N}_{np} + \hat{N}_{nn}\right)}{3}} \tag{9'}$$

The corresponding bit error rate is:

$$P_{e} = Q\left(\frac{AP_{0}N_{RS}}{\sigma_{0}}\right) = Q\left(\sqrt{\frac{A^2 P_{0}^2 N^2_{RS}}{\dfrac{N_{RS}4\left(\left(4+2A^2\right)\hat{N}_{np} + \hat{N}_{nn}\right)}{3}}}\right) = Q\left(\sqrt{\frac{3A^2 N_{RS}\hat{P}_{0}^2}{4\left(\left(4+2A^2\right)\hat{N}_{np} + \hat{N}_{nn}\right)}}\right)$$

To compare the power consumption of a TR-UWB system and the proposed RS-UWB system, $N_{TR}$ TR-doublets and $N_{RS}$ RS-doublets are used to achieve the same bit error rate. The relationship between $N_{TR}$ and $N_{RS}$ can be shown as equation 10'.

$$\frac{3A^2 N_{RS}\hat{P}^2_{RS-pulse}}{8\left(2+A^2\right)\hat{N}_{np}} \approx \frac{N_{TR}\hat{P}^2_{TR-pulse}}{32\hat{N}_{np}} \tag{10'}$$

and

$$\hat{P}_{TR-pulse} = \hat{P}_{RS-pulse} = \hat{P}_o$$

$$N_{RS} = \frac{\left(2 + A^2\right) N_{TR}}{12 A^2} \qquad\qquad (11\grave{})$$

The power consumption of one TR-doublet and one RS-doublet are $P_{TR}=2P_o$ and $P_{RS}=(2+A^2)P_o$ respectively. The percentage of power that can be saved by using RS-doublets is :

$$\frac{N_{TR}P_{TR} - N_{RS}P_{RS}}{N_{TR}P_{TR}} \approx \left(1 - \frac{\left(2 + A^2\right)\left(2 + A^2\right)}{24 A^2}\right) \qquad\qquad (12\grave{})$$

With RS-doublet, a maximum of 66% of power can be saved. Consider in a TR-UWB system, *N* TR-doublets are sent for every digital '1' or '0'. The power consumption of a train of TR-doublets is $2P_oN$. Referring to equation 11', with *A* being set 2, only *N/8* of RS-doublets are needed to provide the same system performance. The amount of power required is just *3NP$_o$/4*. That is, 62.5% of the emission power is saved in this case but the multiple access capacity is reduced because the number of available code sets is reduced significantly. To maintain the multiple access capacity, more low power RS-doublets are used.
For example, if $\hat{P}_{TR-pulse} = K\hat{P}_{RS-pulse}$, equation 11' becomes:

$$N_{RS} = \frac{\left(2 + A^2\right) K N_{TR}}{12 A^2}$$

K is then chosen according to the required multiple access capacity.

Appendix III

Time Dithering of RS Doublets

Consider a power signal $x_T(t)$ with period T. The energy of a period of the signal is:

$$E_t(T) = \int_0^T x_t^2(t)\, dt = \int_{-\infty}^{\infty} X_T(f)\, df \qquad\qquad (1\grave{}\grave{})$$

For a random signal, the average power of the signal can be expressed as:

$$\lim_{T \to \infty} E\left[P_x(T)\right] = \lim_{T \to \infty} E\left[\frac{1}{T}\int_0^T x^2(t)\,dt\right]$$

$$= \int_{-\infty}^{\infty} \lim_{T \to \infty} E\left[\frac{|X_T(f)|^2}{T}\right] df = \int_{-\infty}^{\infty} S_x(f)\,df \qquad (2\text{''})$$

Such that

$$S_x(f) = \lim_{T \to \infty} E\left[\frac{|X_T(f)|^2}{T}\right] \qquad (3\text{''})$$

is known as the PSD and it is the tool to be used here to derive the PSDs of different signals.

The general representation of a pulse train for a data bit $d_k$ from the i-th user is:

$$x_k^{(i)}(t) = \sum_{n=0}^{N_s - 1} a_n p(t - t_n) \qquad (4\text{''})$$

where p(t) is a unit pulse with pulse width of sub-nanoseconds and P(f) is the frequency domain representation of the pulse. $t_n$ is the time delay of each pulse. Different modulation schemes assign a value to $t_n$ according to different set of rules. $a_n$ is the amplitude relative to the unit pulse and is controlled by the data bit to be transmitted.

In Time Hopping Pulse Position Modulation (TH-PPM) systems:

$$a_n = d_k$$

$$t_n = nT_b - c^{(i)}(n)T_c \qquad (5\text{''})$$

where $c^{(i)}(n)$ is the n-th element of the PN Code of the i-th user. $T_b$ is the pulse repetition period. $T_c$ is the chip period and in this case, $N_c T_c \pounds T_b$.

In Direct Sequence Pulse Position Modulation (DS-PPM) systems:

$$a_n = d_k c^{(i)}(n)$$

$$t_n = nT_c \qquad (6\text{''})$$

It can be shown that no time hopping code can remove the spikes in the spectrum except the use of bipolar signaling.

The PSD of a DS-PPM pulse train is classified as a bipolar pulse train with pseudorandom modulation. The corresponding PSD is:

$$S_x(f) = |P(f)|^2 \frac{1}{T_c}$$

$$(7\text{``})$$

which has no frequency spike.

The pulse train described in equation 4" uses one pulse per code element. For the communication systems using the above PPM pulse train, the acquisition time for synchronization and synchronization accuracy are in picosecond range accuracy. Besides, the receiver has to generate a good pulse template for correlation purposes.

Intuitively, the shorter the pulse used, the more difficult it is to establish and maintain synchronization. The acquisition time becomes longer and the receivers become complex. The design of the template generator is very difficult because it has to be adaptive to the channel changes. The result is higher power consumption and complex transceiver design.

The Transmit Reference scheme avoids the synchronization and local pulse template related problems by using two pulses, known as a TR-doublet, for every code element. By autocorrelating the received doublet to its delayed version with multipliers and integrators, suboptimal detection is realized. The resultant transceiver is simple and the power consumption can be lower. The disadvantage is low efficiency and low data rate.

To ensure TR-UWB and RS-UWB systems do not affect the operation of other existing wireless communication systems severely, the radiation power of the systems must not exceed the limitations imposed by the regulations. The PSDs of various pulse trains give insights into the degree of interference and effect that UWB systems can introduce. The ideal synchronous TR-doublet train and RS-doublet train are then evaluated based upon stochastic theory.

A TR-doublet train with pseudorandom code can be written as:

$$x(t) = \sum_{n=0}^{N_c-1} \left( p(t - nT_b) + c_n p(t - nT_b - \tau_0) \right)$$

$$c_n^{(i)} \in \{-1,1\}$$

$$(8\text{``})$$

where $c_n^{(i)}$ is the pseudorandom code element for the code set of the i-th user. $\tau_0$ is the inter-pulse delay of the user i. The PSD of a signal x(t) is calculated as follows: From 2",

$$X_{KT}(f) = P(f) \sum_{n=0}^{N_c-1} e^{-j\omega nT_b} \left( 1 + a_n e^{-j\omega \tau_0} \right)$$

$$(9\text{``})$$

and from 3"

$$S_x(f) = |P(f)|^2 \left( \frac{1}{T} + \frac{1}{T^2} \sum_{n=-\infty}^{n=\infty} \delta\left( f - \frac{n}{T_b} \right) \right)$$

$$(10\text{``})$$

By observing equation 10", the PSD consists of two main parts. The first part is controlled by the pulse shape, which is denoted by the pulse spectrum $P(f)$. The second part is controlled by the relative timing of the doublets. Though the data modulating pulses in equation 8" are encoded with bipolar sequencing, i.e. $c_n^{(i)} \in \{-1,1\}$, the reference pulses

are sent regularly without modulation and so frequency spikes are found in the PSD.

There is another way of using TR-doublets:

$$x(t) = \sum_{n=0}^{N_b-1} \left( p(t - nT_b) + p(t - nT_b - t_{c_n}) \right)$$

$$t_{c_n} \in \{\tau_0, \tau_1\}$$

$$(11\text{''})$$

where $\tau_0$ and $\tau_1$ are the possible inter-pulse delays for the doublets. For example, a TR-doublet with inter-pulse delay $\tau_0$ represents a code element "0" while $\tau_1$ is for a code element "1". The PSD can be shown as:

$$S_x(f) = \left| P(f) \right|^2 \left| \begin{pmatrix} \dfrac{3/2 + \cos(2\pi f \tau_0) + \cos(2\pi f \tau_1)}{} \\ + \cos(2\pi f(\tau_0 - \tau_1))/2 \\ + (\cos(2\pi f(\tau_1 - \tau_0)) - 1)/2T_b \end{pmatrix} \dfrac{1}{T_b^2} \sum_{n=-\infty}^{n=\infty} \delta\left(f - \dfrac{n}{T_b}\right) \right| \qquad (12\text{''})$$

The PSD of the TR-doublet train is plotted in Figure 10.

Figure 10 is plotted by neglecting the effect of $P(f)$. The envelope of the spectral lines of the PSD is plotted on the upper graph and the continuous spectrum is plotted on the lower graph. To remove the spectral lines in the PSD, $a_n$ is inserted. Equation 11" becomes:

$$x(t) = \sum_{n=0}^{N_b-1} a_n \left( p(t - nT_b) + p(t - nT_b - t_{c_n}) \right)$$

$$(13\text{''})$$

the corresponding PSD becomes:

$$S_x(f) = \left| P(f) \right|^2 \left| \dfrac{(2 + \cos(\omega\tau_0) + \cos(\omega\tau_1))}{T} \right| \qquad (14\text{''})$$

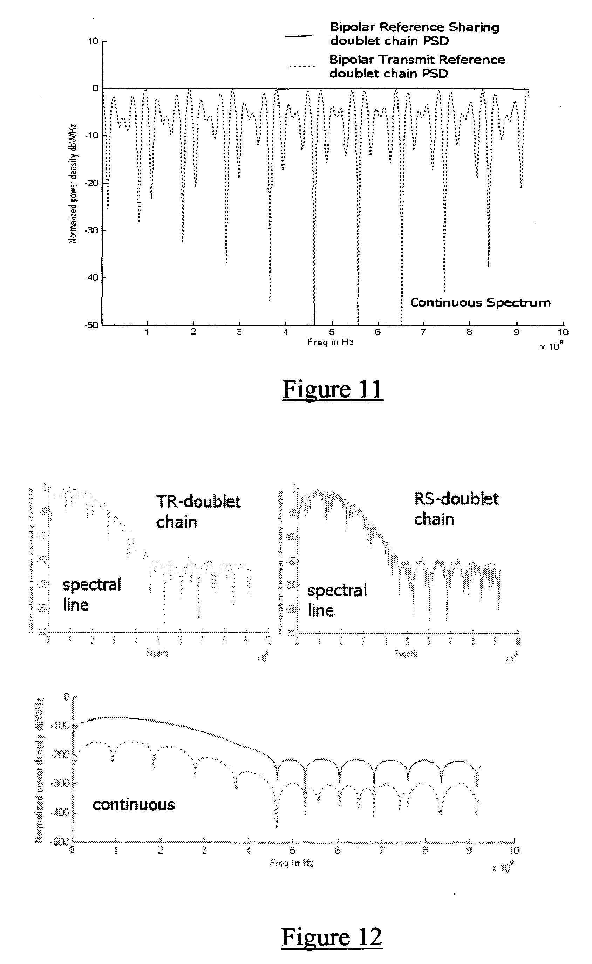

The PSD of equation 14" can be found in Figure 11. From the plots, it can be found that the PSDs fluctuate around a mean value across the frequency axis. As a result, only the pulse spectrum can be used to control the resultant PSD pattern.

In the case of 3-pulse-RS-doublet described in Figure 1, the RS-doublet can be expressed as:

$$x(t) = \sum_{n=0}^{N_b-1} \begin{pmatrix} p(t - nT_b) + A_n p(t - nT_b - \tau_{n1}) \\ + p(t - nT_b - \tau_{n2}) \end{pmatrix} \qquad (15\text{''})$$

With detailed investigations on the time averages of the various signal components, the PSD of the RS-doublet train described in equation 15" is:

$$S_x(f) = |P(f)|^2 \left( \frac{1}{T^2} \begin{pmatrix} 11/8 + \begin{pmatrix} \cos(2\pi f \tau_0) \\ + \cos(2\pi f \tau_1) \end{pmatrix} \Big/ 2 \\ + \cos(2\pi f(\tau_0 + \tau_1)) \\ + \cos(2\pi f(\tau_0 - \tau_1))/2 \\ + \cos(4\pi f(\tau_0 - \tau_1))/8 \end{pmatrix} \sum_{n=-\infty}^{n=\infty} \delta\left(f - \frac{n}{T}\right) \\ + \frac{1}{T}\begin{pmatrix} 5/8 + A^2 - \cos(2\pi f(\tau_0 - \tau_1))/2 \\ - \cos(4\pi f(\tau_0 - \tau_1))/8 \end{pmatrix} \right) \qquad (16``)$$

The plot of the corresponding PSD is shown below in Figure 12.

With reference to Figure 12, it is noted that the shape of the PSD of the RS-doublet train is similar to that of the TR-doublet train. Also, with the same spectral densities of the discrete spectral lines, the spectral density of the continuous spectrum of the RS-doublet train is higher than that of the TR-doublet train. That is, comparatively speaking, the spectral line power of RS-doublet train is lower than that of TR-doublet train. Similarly, spectral lines cover the whole frequency band. Again, to remove the spectral lines, a factor $a_n$ is inserted to the doublets so that bipolar signaling can be realized.

$$x(t) = \sum_{n=0}^{N_s-1} a_n \begin{pmatrix} p(t - nT_b) + A_n p(t - nT_b - \tau_{n1}) \\ + p(t - nT_b - \tau_{n2}) \end{pmatrix} \qquad (17``)$$

The corresponding PSD is:

$$S_x(f) = |P(f)|^2 \frac{1}{T} \begin{pmatrix} 2 + A^2 + \cos(2\pi f(\tau_0 + \tau_1)) \\ + (\cos(2\pi f \tau_0) + \cos(2\pi f \tau_1))/2 \end{pmatrix} \qquad (18``)$$

When comparing the PSD of bipolar RS-doublet train to the PSD of bipolar TR-doublet train, it is obvious that the use of RS-doublet smoothes the spectrum of the resultant doublet train. As a result, the only other factor affecting the overall PSD will be the choice of the pulse shape.

Note that each TR-doublet or RS-doublet carries the information by itself. In other words, the relative timing between each doublet is not important to the demodulation of data with the appropriate receiver architecture. The reference pulse is only important to the doublet it belongs to. So, the doublet train described as equation 19" can still be detected as normal.

$$x(t) = \sum_{n=0}^{N_s-1} \begin{pmatrix} p(t - \tau_{ran_n} - nT_b) + A_n p(t - \tau_{ran_n} - nT_b - \tau_{n1}) \\ + p(t - \tau_{ran_n} - nT_b - \tau_{n2}) \end{pmatrix} \qquad (19``)$$

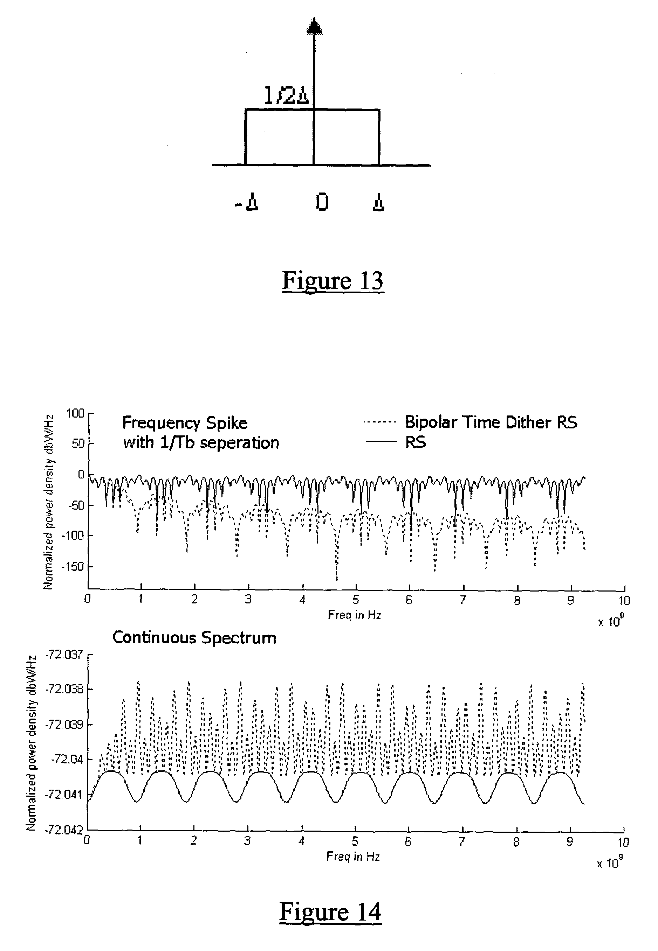

$\tau_{randn}$ is a random delay between each of the RS-doublets. It can be added deliberately or it is the time deviation from the time the doublets should be sent due to noise. The probability density function of the value $\tau_{randn}$ is assumed to be as shown in Figure 13.

The value of $\Delta$ depends on the system design and should be around 5-10% of $T_b$. The resultant PSD is:

$$S_x(f) = |P(f)|^2 \left( \frac{sinc^2(2f\Delta)}{T^2} \left[ \frac{11}{8} + \frac{1}{2}\left( \frac{cos(2\pi f\tau_0)}{+cos(2\pi f\tau_1)} \right) + cos(2\pi f(\tau_0+\tau_1)) + cos(2\pi f(\tau_0-\tau_1))/2 + cos(4\pi f(\tau_0-\tau_1))/8 \right] \sum_{n=-\infty}^{n=+\infty} \delta\left( f - \frac{n}{T} \right) + \frac{1}{T} \left[ 2 + A^2 + cos(\omega(\tau_0+\tau_1)) + \frac{(cos(\omega\tau_0)+cos(\omega\tau_0))}{2} - sinc^2(2f\Delta)\left[ \frac{11}{8} + \frac{1}{2}\left( \frac{cos(2\pi f\tau_0)}{+cos(2\pi f\tau_1)} \right) + cos(2\pi f(\tau_0+\tau_1)) + cos(2\pi f(\tau_0-\tau_1))/2 + cos(4\pi f(\tau_0-\tau_1))/8 \right] \right] \right) \quad (20``)$$

The random delay introduced modifies the spectral line density. The spectral lines at higher frequencies are attenuated. The larger the value of $\Delta$, the sharper the decay of the term $sinc^2(2f\Delta)$. However, the spectral lines at lower frequencies, where most of the narrow band systems operate in, still cannot be removed.

Figure 14 shows the PSD comparison between Bipolar Time Dither RS-doublet train to RS-doublet train (excluding the effect of P(f)). It can be shown that the random delay attenuate the spectral spikes at the higher frequencies without changing the continuous spectrum a lot. Also, the continuous spectrum of the resultant RS-doublet train PSD is flat without being affected by the random delay.

**Claims**

1. An ultra-wideband wireless information transmission method comprising:

   transmitting electromagnetic data pulses and reference pulses over a transmission medium, information being encoded as a time shift between the data pulses and the reference pulses, at least two of the data pulses sharing a common reference pulse; and
   receiving the data and reference pulses and using the associated timing information to recover said information.

2. A method according to claim 1 and comprising encoding each bit of information to be sent using a pseudorandom noise (PN) code, the code being made up of code elements each of which has three possible states and each element being transmitted as a pulse "doublet" comprising a reference pulse and two data pulses, one data pulse on each side of the reference pulse, the time spacing between the reference pulse and each data pulse having one of two values.

3. A method according to claim 2, the step of receiving the data and reference pulses and using the associated timing information to recover said information comprising identifying a PN code in the received doublet stream and mapping that code to a binary 1 or 0 to recover the original information.

4. An ultra-wideband wireless data transmitter comprising:

   processing means for encoding information as a sequence of data and reference pulses, the information being encoded as a time shift between the data pulses and the reference pulses, at least two of the data pulses sharing a common reference pulse; and
   transmission means for sending the pulse sequence over a transmission medium as corresponding pulses of electromagnetic radiation.

**5.** A transmitter according to claim 4, the processing means comprising:

means for generating a pulse;
a first delay circuit having an input for receiving said pulse, and means for applying a first or second delay to said pulse;
a second delay circuit having an input for receiving the delayed pulse from the first delay circuit and means for applying said first or second delay to the pulse; and
an output coupled to receive the output of said means for generating a pulse, and of said first and second delay circuits, the output being coupled to said transmission means.

**6.** An ultra-wideband wireless data receiver comprising:

receiver means for receiving an electromagnetic pulse sequence sent over a transmission medium, information being encoded as a time shift between the data pulses and the reference pulses, at least two of the data pulses sharing a common reference pulse ;
processing means for recovering the encoded information from the received pulse sequence.

**7.** A receiver according to claim 6, wherein each reference pulse is shared by two data pulses sent on either side of the reference pulse, said processing means comprising:

a pair of delay means arranged to delay the received pulse sequence by different amounts corresponding respectively to the two delays used to encode information;
a pair of multipliers arranged to receive the received signal in parallel, in addition to respective outputs of the delay means; and
a pair of integrators arranged to receive the outputs of respective multipliers.

**8.** A receiver according to claim 7, the original information being encoded using PN codes, the receiver comprising correlation means for correlating the outputs of the integrators to detect the presence of the specified PN codes, and hence recover the original information.

**Patentansprüche**

**1.** Ultrabreitband-drahtloser-Informationsübertragungsverfahren, umfassend:

das Übertragen von elektromagnetischen Datenimpulsen und Referenzimpulsen über ein Übertragungsmedium, wobei Information als eine Zeitverschiebung zwischen den Datenimpulsen und den Referenzimpulsen kodiert wird, wobei mindestens zwei der Datenimpulse einen gemeinsamen Referenzimpuls teilen; und
das Empfangen der Daten- und Referenzimpulse und die Verwendung der zugehörigen Timing-Information, um die Information zurückzuerlangen.

**2.** Verfahren nach Anspruch 1 und umfassend das Kodieren von jedem zu sendenden Bit Information, unter Verwendung eines pseudo-zufälligen Rausch(PN)-Codes, wobei der Code aus Codeelementen besteht, von denen jedes drei mögliche Zustände hat und wobei jedes Element als ein einen Referenz- und zwei Datenimpulse enthaltendes Impuls-Doublet übertragen wird, wobei sich ein Datenimpuls auf jeder Seite des Referenzimpulses befindet, wobei der Zeitabstand zwischen dem Referenzimpuls und dem Datenimpuls einen von zwei Werten hat.

**3.** Verfahren nach Anspruch 2, wobei der Schritt des Empfangens der Daten- und Referenzimpulse und des Verwendens der zugehörigen Timing-Information, um die Information zurückzuerlangen, das Identifizieren eines PN-Codes im empfangenen Doublet-Strom und das Mappen jenes Codes in eine binäre 1 oder 0, um die ursprüngliche Information zurückzuerlangen, umfasst.

**4.** Ultrabreitband-drahtloser-Informationsüberträger, umfassend:

ein Bearbeitungsmittel zum Kodieren von Information als eine Sequenz von Daten- und Referenzimpulsen, wobei die Information als eine Zeitverschiebung zwischen den Datenimpulsen und den Referenzimpulsen kodiert wird, wobei mindestens zwei der Datenimpulse einen gemeinsamen Referenzimpuls teilt; und
ein Übertragungsmittel zum Senden der Impulssequenz auf einem Übertragungsmedium als entsprechende Impulse elektromagnetischer Strahlung.

**5.** Überträger nach Anspruch 4, wobei das Bearbeitungsmittel umfasst:

ein Mittel zum Erzeugen eines Impulses;
eine erste Verzögerungsschaltung mit einer Eingabe zum Empfangen des Impulses, und ein Mittel, um dem Impuls eine erste oder zweite Verzögerung zuzuführen;
eine zweite Verzögerungsschaltung mit einer Eingabe zum Empfangen des verzögerten Impulses von der ersten Verzögerungsschaltung und ein Mittel, um dem Impuls die erste oder zweite Verzögerung zuzuführen; und
eine gekoppelte Ausgabe, zum Empfangen der Ausgabe des Mittels zum Erzeugen eines Impulses, und der ersten und zweiten Verzögerungsschaltung, wobei die Ausgabe an das Übertragungsmittel gekoppelt ist.

**6.** Ultrabreitband-drahtloser-Informationsüberträger, umfassend:

ein Übertragungsmittel zum Empfangen einer elektromagnetischen Impulssequenz, die über ein Übertragungsmedium gesendet wird, wobei Information als Zeitverschiebung zwischen den Datenimpulsen und Referenzimpulsen kodiert wird, wobei mindestens zwei der Datenimpulse einen gemeinsamen Referenzimpuls teilen;
ein Verarbeitungsmittel, um die kodierte Information von der empfangenen Impulssequenz zurückzuerlangen.

**7.** Überträger nach Anspruch 6, wobei jeder Referenzimpuls von zwei Datenimpulsen, die auf jeder Seite des Referenzimpulses gesendet werden, geteilt wird, wobei das Verarbeitungsmittel umfasst:

ein Paar Verzögerungsmittel, die angeordnet sind, um die empfangene Impulssequenz um unterschiedliche Beträge, die den zwei jeweiligen Verzögerungen entsprechen, die verwendet werden, um die Information zu kodieren, zu verzögern.
ein Paar Multiplikatoren, die angeordnet sind, um das empfangene Signal, zusätzlich zu entsprechenden Ausgaben des Verzögerungsmittels, parallel zu empfangen; und
ein Paar Integratoren, die angeordnet sind, um die Ausgaben jeweiliger Multiplikatoren zu empfangen.

**8.** Empfänger nach Anspruch 7, wobei die ursprüngliche Information unter Verwendung von PN-Codes kodiert wird, wobei der Empfänger ein Korrelationsmittel zum korrelieren der Ausgaben der Integratoren umfasst, um die Anwesenheit der spezifizierten PN-Codes zu erkennen und somit die ursprüngliche Information zurückzuerlangen.

**Revendications**

**1.** Procédé de transmission d'informations sans fil à bande ultralarge comprenant:

la transmission d'impulsions de données et de référence électromagnétiques sur un support de transmission, l'information étant encodée en tant que décalage temporel entre les impulsions de données et les impulsions de référence, au moins deux des impulsions de données partageant une impulsion de référence commune; et le réception des impulsions de données et de référence et l'utilisation de l'information de synchronisation associée pour récupérer ladite information.

**2.** Procédé selon la revendication 1 et comprenant l'encodage de chaque bit d'information qui doit être envoyé en utilisant un code de bruit pseudo-aléatoire (PN), le code étant composé d'éléments de code dont chacun a trois états possibles et chaque élément étant transmis en tant que doublet d'impulsions comprenant une impulsion de référence et deux impulsions de données, une impulsion de données sur chaque côté de l'impulsion de référence, l'espace de temps entre l'impulsion de référence et chaque impulsion de données ayant une parmi deux valeurs.

**3.** Procédé selon la revendication 2, l'étape de réception des impulsions de données et de référence et d'utilisation de l'information de synchronisation associée pour récupérer ladite information comprenant l'identification d'un code PN dans le flux de doublets et le mappage de ce code en un 1 ou 0 binaire pour récupérer l'information originale.

**4.** Emetteur de données à bande ultralarge sans fil comprenant:

un moyen de traitement pour encoder des informations en tant que séquence de données et d'impulsions de référence, l'information étant encodée en tant que décalage temporel entre les impulsions de données et les impulsions de référence, au moins deux des impulsions de données partageant une impulsion de référence commune; et

un moyen de transmission pour envoyer la séquence d'impulsions sur un support de transmission en tant qu'impulsions de rayonnement électromagnétique correspondantes.

5. Emetteur selon la revendication 4, le moyen de traitement comprenant:

un moyen de génération d'une impulsion;

un premier circuit retard ayant une entrée pour recevoir ladite impulsion, et un moyen pour appliquer un premier ou deuxième retard à ladite impulsion;

un second circuit retard ayant une entrée pour recevoir l'impulsion retardée du premier circuit retard et un moyen pour appliquer ledit premier ou second retard à l'impulsion; et

une sortie couplée pour recevoir la sortie dudit moyen pour générer une impulsion, et desdits premier et second circuits retard, la sortie étant couplée audit moyen de transmission.

6. Emetteur de données à bande ultralarge sans fil comprenant:

un moyen de réception pour recevoir une séquence d'impulsion électromagnétique envoyée sur un support de transmission, l'information étant encodée en tant que décalage temporel entre les impulsions de données et les impulsions de référence, au moins deux des impulsions de données partageant une impulsion de référence commune;

un moyen de traitement pour récupérer l'information encodée de la séquence d'impulsions reçue.

7. Récepteur selon la revendication 6, dans lequel chaque impulsion de référence est partagée par deux impulsions de données envoyées sur chaque côté de l'impulsion de référence, ledit moyen de traitement comprenant:

une paire de moyens de retardement configurés pour retarder la séquence d'impulsions reçue de quantités différentes correspondant respectivement aux deux retards utilisés pour encoder l'information;

une paire de multiplicateurs configurés pour recevoir le signal reçu en parallèle, en plus des sorties respectives des moyens de retardement; et

une paire d'intégrateurs configurés pour recevoir les sorties des multiplicateurs respectifs.

8. Receveur selon la revendication 7, l'information originale étant encodée en utilisant des codes PN, le receveur conprenant un moyen de corrélation pour corréler les sorties des intégrateurs pour détecter la présence des codes PN spécifiques, et ainsi récupérer l'information originale.

| Bit 0 | Bit 1 | $t_a$ | $t_b$ | K |
|-------|-------|-------|-------|-----|
| 0 | 0 | $t_0$ | $t_1$ | A |
| 0 | 1 | $t_0$ | $t_1$ | -A |
| 1 | 0 | $t_1$ | $t_0$ | -A |
| 1 | 1 | $t_1$ | $t_1$ | A |

## Figure 1

## Figure 2

Figure 3

Figure 4

Figure 5

Figure 6

Figure 7

Figure 8

Figure 9

Figure 10

## Figure 11

## Figure 12

## Figure 13

## Figure 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROBERT A. SCHOLTZ ; MOE Z. WIN.** Impulse radio. *IEEE PIMRC'97*